# EUROPEAN PATENT SPECIFICATION

(11) **EP 1 673 924 B1**
(45) Date of publication and mention of the grant of the patent: **09.12.2009**
(21) Application number: 03757993.5
(22) Date of filing: 16.10.2003
(51) Int. Cl.: H04L 29/08, H04L 12/56

(54) **MOBILE PEER-TO-PEER NETWORKING**
MOBIL-PEER-TO-PEER-VERNETZUNG
MISE EN R SEAU POSTE POSTE MOBILE

(43) Date of publication of application: 28.06.2006
(73) Proprietor: NTT DoCoMo, Inc., Tokyo 100-6150 (JP)
(72) Inventor: KELLERER, Wolfgang, 82256 Fürstenfeldbruck (DE); SCHOLLMEIER, Rüdiger, 81379 München (DE); GRUBER, Ingo, 80634 München (DE); NIETHAMMER, Florian, 81669 München (DE)
(74) Representative: HOFFMANN EITLE
(86) International application number: PCT/EP2003/011472
(87) International publication number: WO 2005/041534

(56) References cited:
- US-A1- 2002 178 260
- US-A1- 2003 125 063
- A. KLEMM, C. LINDEMANN, AND O. WALDHORST: "A Special-Purpose Peer-to-Peer File Sharing System for Mobile Ad Hoc Networks" IEEE SEMIANNUAL VEHICULAR TECHNOLOGY CONFERENCE (VTC2003-FALL), [Online] 4 October 2003 (2003-10-04), - 9 October 2003 (2003-10-09) pages 41-49, XP002282779 ORLANDO, FL Retrieved from the Internet: URL:http://rul-www.cs.uni-dortmund.de/Mobi leP2P/publications/vtc03.pdf> [retrieved on 2004-05-24]
- M. KHAMBATTI AND S. AKKINENI: "Location Management in Peer-to-Peer Mobile Ad Hoc Networks " TECHNICAL REPORT COMPUTER SCIENCE AND ENGINEERING DEPARTMENT UNIVERSITY OF ARIZONA, [Online] May 2002 (2002-05), XP002282780 Retrieved from the Internet: URL:http://www.public.asu.edu/~mujtaba/Art icles%20and%20Papers/TR-05-02-a.pdf> [retrieved on 2004-05-24]
- RÜDIGER SCHOLLMEIER AND INGO GRUBER: "Routing in Peer-to-Peer and Mobile Ad Hoc Networks. A Comparison" INTERNATIONAL WORKSHOP ON PEER-TO-PEER COMPUTING, [Online] 19 May 2002 (2002-05-19), - 24 May 2002 (2002-05-24) XP002282781 Pisa, Italy Retrieved from the Internet: URL:http://www.elet.polimi.it/p2p/papers/1 .pdf> [retrieved on 2004-05-25]
- ORAM ANDY (ED): "Peer-to-peer: Harnessing the Benefits of a Disruptive Technology passage" PEER-TO-PEER: HARNESSING THE BENEFITS OF A DISRUPTIVE TECHNOLOGY, XX, XX, 15 March 2001 (2001-03-15), pages 94-122, XP002259974
- RÜDIGER SCHOLLMEIER, INGO GRUBER, FLORIAN NIETHAMMER: "Protocol for Peer-to-Peer Networking in Mobile Environments" IN PROCEEDINGS OF IEEE12TH INTERNATIONAL CONFERENCE ON COMPUTER COMMUNICATIONS AND NETWORKS, ICCCN'03, [Online] 20 October 2003 (2003-10-20), XP002291690 DALLAS, TEXAS, USA Retrieved from the Internet: URL:http://www.lkn.ei.tum.de/lkn/mitarbeit er/hrs/Komponenten/paper/EDSR.pdf> [retrieved on 2004-08-05]
- INGO GRUBER, RÜDIGER SCHOLLMEIER, WOLFGANG KELLERER: "Performance Evaluation of the Mobile Peer-to-Peer Protocol" IN PROCEEDINGS OF THE FOURTH INTERNATIONAL WORKSHOP ON GLOBAL AND PEER-TO-PEER COMPUTING, GP2PC'2004, [Online] 19 April 2004 (2004-04-19), XP002291691 CHICAGO, USA Retrieved from the Internet: URL:http://www.lkn.ei.tum.de/lkn/mitarbeit er/hrs/Komponenten/paper/MPP_camera.pdf> [retrieved on 2004-08-04]
- JAKOB ERIKSSON ET ALT.: "PeerNet: Pushing Peer-to-peer down the stack" 2ND INTERNATIONAL WORKSHOP ON PEER-TO-PEER SYSTEMS (IPTPS '03), [Online] 20 February 2003 (2003-02-20), - 21 February 2003 (2003-02-21) XP002282783 Berkeley, CA, USA Retrieved from the Internet: URL:http://iptps03.cs.berkeley.edu/final-p apers/peernet.pdf> [retrieved on 2004-05-24]
- ANWITAMAN DATTA: "MobiGrid: Peer-to-Peer Overlay and Mobile Ad-Hoc Network Rendezvous - a Data Management Perspective" CAISE 2003 DOCTORAL SYMPOSIUM, IN CONJUNCTION WITH THE 15TH CONFERENCE ON ADVANCED INFORMATION SYSTEMS ENGINEERING, [Online] 16 June 2003 (2003-06-16), XP002291692 KLAGENFURT,VELDEN, AUSTRIA Retrieved from the Internet: URL:http://www.mics.ch/getDoc.php?docid=51 8&docnum=1> [retrieved on 2003-08-05]
- FOX HARRELL, YUANFANG HU, GUILIAN WANG, HUAXIA XIA: "Survey of Locating & Routing in Peer-to-Peer Systems"[Online] 3 December 2001 (2001-12-03), XP002291693 Retrieved from the Internet: URL:http://www.cse.ucsd.edu/classes/fa01/c se221/projects/group15.pdf> [retrieved on 2004-08-04]
- Y. CHARLIE HU, SAUMITRA M. DAS, AND HIMABINDU PUCHA: "Exploiting the Synergy between Peer-to-Peer and Mobile Ad Hoc Networks" IN PROCEEDINGS OF HOTOS-IX, NINTH WORKSHOP ON HOT TOPICS IN OPERATING SYSTEMS, [Online] 18 March 2003 (2003-03-18), XP002291694 KAUAI, HAWAII Retrieved from the Internet: URL:http://dynamo.ecn.purdue.edu/~ychu/pub lications/hotos03_dpsr.pdf> [retrieved on 2004-08-05]

## Description

### FIELD OF INVENTION

The present invention relates to a protocol stack for mobile peer-to-peer networking in a mobile communication environment, and in particular to a protocol suite supporting peer-to-peer overlay networking over mobile wireless networks for the introduction of new services and options on the application layer and for better performance.

### BACKGROUND ART

In US 2003/0125063 A1, there is described a peer-to-peer communication within a mobile network towards a terminal. Having received a request from the terminal via the wireless network, then one or more records of a mobile agent repository are updated based on the request such that the mobile agent repository mirrors a content within the shared space on the terminal. Then, they send a response to the terminal via the wireless network.

In XP-002282779, there is described a peer-to-peer file sharing system for mobile ad hoc networks. In particular, focus is put on searching and file transfer tailored to the characteristics of MANET and the requirements of peer-to-peer file sharing. The described approach is based on an application layer overlay network. Overlay routes are set up on demand by a search algorithm, closely matching network topology and transparently aggregating redundant transfer paths on a per-file basis.

Generally, peer-to-peer applications have an optimised algorithm to find information within an overlay network, while they generally rely on a network layer protocol, e.g., TCP and assumed stable connections. Nevertheless, in wireless communication networks, in particular with respect to ad-hoc wireless communication networks, connection breaks are common, as all mobile nodes are in motion.

Whenever two adjacent mobile nodes currently forwarding data packets move out of each other's proximity, the connection between both mobile nodes will break. Here, the network layer protocol not being aware of the peer-to-peer application being on top of the network layer protocol will try to re-establish a new route to the same destination node, independent of the necessary effort.

Nevertheless, instead of trying to create a new route to the same source of information, other sources could provide the information at lower costs after change of network topology.

In other words, mobile nodes will report connection break to the peer-to-peer protocol level and related applications which then decide whether the old source of information is still utilizable or different sources of information are more appropriate.

Further, as peer-to-peer networks usually operate on top of fixed network structures, peer-to-peer network nodes mostly do not distinguish between communication participants in close proximity and network participants being located far away. As distance between mobile nodes does generally not affect the stability and error-free operation of communications in fixed networks, usual peer-to-peer protocols can create connections to a distant node, although the searched information is available more closely as well.

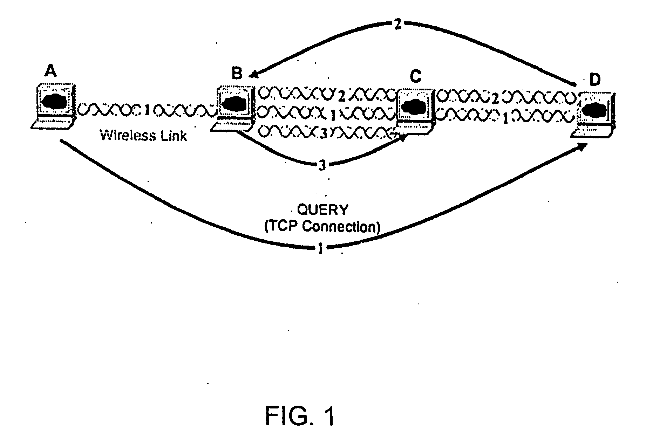

In more detail and as an example, Fig. 1 shows a simple peer-to-peer file sharing application running on top of a mobile ad-hoc network having four nodes. On the peer-to-peer overlay network level, node A maintains a static connection to node D, so that when node A wants to search for a file in the network, it sends out a query message to node D. Should the requested file not be available at node D, it will then forward the message to node B via the connection to this node B, i.e. connection No. 2.

According to the example shown in Fig. 1, this message will again be forwarded to node C for the same reason, so that one could assume that the requested file may be unveiled at this node C. Therefore, on the physical network layer, six wireless connections will be used to find the node C which is only two hops away.

In conclusion, the maintenance of static overlay connections is the major performance bottleneck for applying peer-to-peer network protocols over wireless communication networks like a mobile ad-hoc network, where bandwidth and battery power are very scarce resources.

While in the prior art some investigations on a combination of peer-to-peer applications and ad-hoc wireless communication networks have been explained, nevertheless, they still lack sufficient consideration of ad-hoc networking capabilities on the peer-to-peer network protocol level. E.g., while JXME, A. Arora, 'JXTA for J2ME™-Extending the Reach of Wireless With JXTA Technology', White Paper, 2002, adapts JXTA to mobile environments, it still does not consider a mobile ad-hoc scenario. Further, the proposal of Lawrence, 'LEAP into Ad-Hoc Networks', Proceedings of the Workshop on Ubiquitous Agents on Embedded, Wearable, and Mobile Devices, Bologna, Italy, 2002, does not ask the question of routing, and 7DS, M. Papadopouli, H. Schulzrinne, 'Effects of Power Conservation, Wireless Coverage and Cooperation on Data Dissemination among Mobile Devices', Proceedings of the ACM Symposium on Mobile Ad-Hoc Networking (MOBIHOC 2001), Long Beach, CA, 2001, does not consider location information. Further, PROEM, G. Kortuem, J. Schneider, 'An Application Platform for Mobile Ad-hoc Networks', Proceedings of the Workshop on Application Models and Programming Tools for Ubiquitous Computing (UBICOMP 2001), Atlanta, Georgia, 2001, has deficiencies in scaling for larger mobile ad-hoc scenarios, while ORION, A Klemm, C. Lindemann, O.P. waldhorst, 'A Special-Purpose Peer-to-Peer File Sharing System for Mobile Ad-Hoc Networks', Proceedings of the Workshop on Mobile Ad-Hoc Networking and Computing (MADNET 2003), Sophia-Antipolis, France, 2003, concentrates on file sharing applications only, lacking location awareness and having a large routing overhead. Still further, while the Bluetooth standard allows for peer-to-peer applications in an ad-hoc communication environment, nevertheless, it does not support routing but only communication via very short distances.

To summarize, the introduction of peer-to-peer computing n wireless ad-hoc communication networks without consideration of particular requirements of these ad-hoc networks has a poor performance, as peer-to-peer protocols are designed to serve for completely independent overlay networking without any knowledge and information of underlying protocols, e.g., location information of requested content or participants. This lack of knowledge of the proximity in peer-to-peer networks may cause distant connections, whereas the same contents could be available more closely. Also, while mobile ad-hoc networks employ hop-by-hop routing where the number of hops increases the routing overhead, peer-to-peer networks are currently unaware of the underlying route and thus unable to judge on the optimal route. In other words, peer-to-peer protocols are designed for fixed networks and thus are not able to cope with varying channels conditions in mobile communication environments, where in particular connection losses are interpreted as if the participant would have left the peer-to-peer network thus causing immediate rerouting.

In M. Khambatti and S. Akkineni XPO 02282780, there is described a Location Management In Peer-to-Peer Mobile Ad Hoc Networks, particularly relying on two location management strategies, i.e. hierarchical and de-centralized. The hierarchical strategy assumes the existence of a small number of beacons that act as both base station and location servers. The de-centralized approach employs a version of a peer-to-peer search technique to achieve location management amongst mobile hosts without the existence of beacons.

Further, in Rüdiger Schollmeier and Ingo Gruber XPO 02282 781, there is described a Routing in Mobile Ad Hoc and Peer-to-Peer Networks. In particular, this reference emphasises similarities and differences of peer-to-peer and mobile ad hoc networks to show synergetic potential hidden in the two de-centralized and self-organizing networks.

### SUMMARY OF INVENTION

In view of the above, the object of the present invention is to optimize peer-to-peer networking over mobile wireless communication networks.

According to the present invention this object is achieved by a method having the features of claim 1, by a mobile mode having the features of claim 1, by a mobile mode having the features of claim 4, and by a computer readable medium having the features of claim 7.

Overall, the present invention introduces a mobile peer-to-peer protocol suite expanding from the network layer to the application layer and vice versa, where the upper peer-to-peer network protocol layer not only specifies suitable search criteria, but also receives appropriate responses so that it is well aware of the wireless network to minimize the traffic wherein it may cope with frequent route breaks. In addition, the network layer routing level receives information about the peer-to-peer application to establish routes only to appropriate communication nodes. Therefore, the present invention forms the necessary framework for creation of involved variety of different services over wireless communication network, e.g., ad-hoc wireless networks.

Therefore, the optimization of peer-to-peer applications over mobile wireless networks supports a higher degree of acceptance at the user, a decrease of costs for service providers, and for the provision of location-based services and applications without the use of any fixed or centralized infra-structure.

In other words, the protocol stack according to the present invention includes an enhanced network layer protocol allowing for dynamic source routing and to find service hosting peers, e.g., based on proximity, further, a mobile peer-to-peer protocol for data exchange on the application layer and a synchronous protocol for interlayer communication between these formal two protocols.

According to the present invention, it is particularly proposed to enhance the functionality of the network layer protocol such that query messages applied to retrieve application resources in the wireless communication network allow for search criteria extending beyond address information, e.g., according to proximity of a mobile node in the mobile communication network providing the query response, or service capabilities. Therefore, according to the present invention, it is proposed to improve the search criteria on the network layer protocol where actually information on the topology of the wireless communication network is available. The information on the type of search criteria to be used on the network layer routing protocol level is provided by a superior peer-to-peer communication layer protocol supporting applications and services.

According to the present invention, the change of the search criteria between the upper peer-to-peer layer protocol and the network layer protocol is achieved by a cross-layer communication channel protocol and particularly adapted to exchange of search-relevant messages between different hierarchy levels in the peer-to-peer protocol stack.

Therefore, during the search for appropriate service resources the maintenance of an appropriate link in a wireless communication network and the operation of the cross-layer communication protocol achieves a higher degree of acceptance of peer-to-peer services over wireless communication networks by the user due to an increase in quality and a decrease of costs, and further a decrease of costs for the provider of the peer-to-peer services. They are perfectly suited for providing routing functionalities in highly dynamic fast changing wireless communication networks, in particular in an un-managed and un-controlled ad-hoc wireless communication environment.

According to another preferred embodiment of the present invention there are provided a computer program products directly loadable into the internal memory of a processing devices in mobile communication environments comprising software code portions for performing the inventive protocol implementations when the product is run on a processing devices of mobile communication environments.

Therefore, the present invention is also provided to achieve an implementation of the different protocols outlined above on computer or processor systems. In conclusion, such implementation leads to the provision of computer program products for use with a computer system or more specifically a processor comprised in e.g., an ad hoc network.

This programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

### DESCRIPTION OF DRAWING

- Fig. 1: shows an example of a peer-to-peer application on top of a wireless network at motivation for the present invention;
- Fig. 2: shows a protocol suite for peer-to-peer operation on top of a wireless communication network according to the present invention;
- Fig. 3: shows a message sequence chart for data search and download in a mobile peer-to-peer network according to the present invention;
- Fig. 4: shows a schematic diagram illustrating functionalities on the level of the network layer routing protocol;
- Fig. 5: shows a schematic diagram illustrating functionalities on the level of the mobile peer-to-peer protocol;

- Fig. 6: shows a directory structure underlying the search of service resources according to the present invention; and

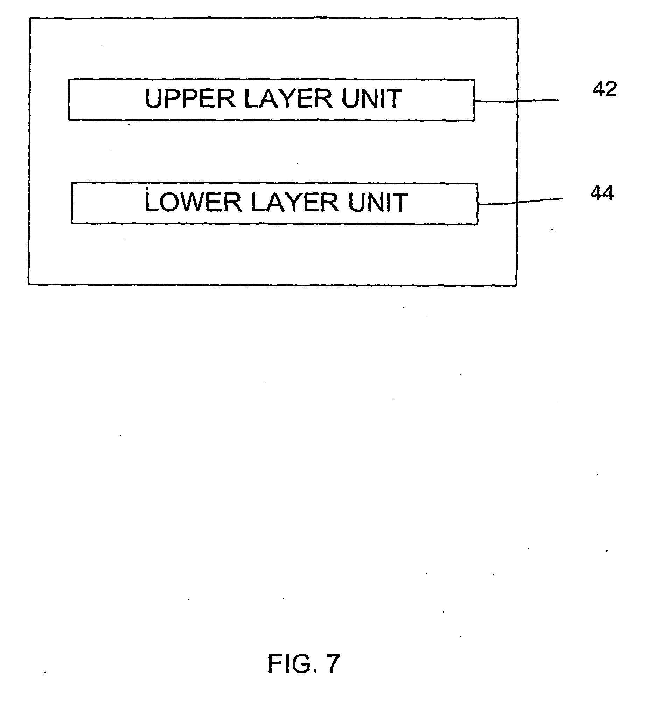

- Fig. 7: shows a schematic diagram illustrating functionalities on the level of the mobile peer control protocol.

### BEST MODE AND PREFERRED EMBODIMENTS OF INVENTION

In the following, the best mode and different aspects and preferred embodiments of the present invention will be described with reference to the drawing. Insofar as different functionalities are described in the following, they may either be implemented software and/or hardware and/or a combination thereof. Further, insofar as the different aspects of protocol implementation on different levels of abstractions will be discussed, it should be noted that each single protocol and related implementation as explained in the following may either be operated on its own, or in combination with further related protocols and corresponding implementation within the overall framework of peer-to-peer protocol stack implementation according to the present invention.

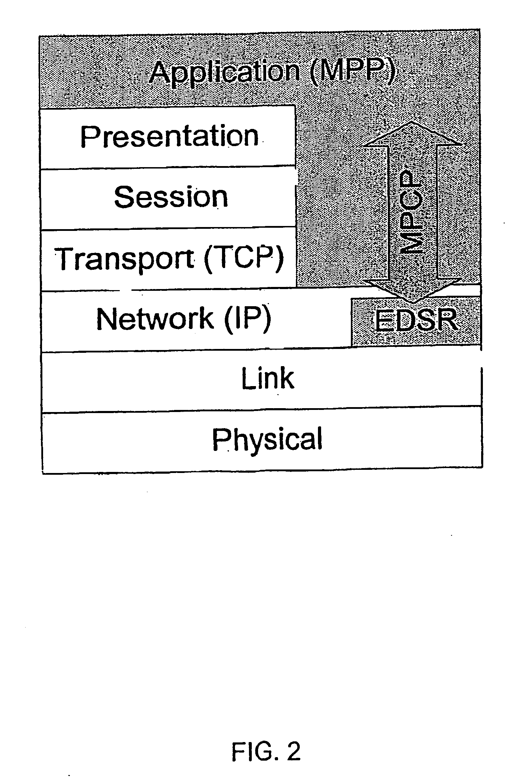

Fig. 2 shows a protocol suite for peer-to-peer operation on top of a wireless communication network according to the present invention.

As shown in Fig. 2, the present invention relates to the provision and implementation of a mobile peer-to-peer protocol MPP, an extended dynamic source routing protocol EDSR, and a mobile peer communication channel control protocol MPCP, respectively.

As shown in Fig. 2, the extended dynamic source routing protocol EDSR runs on tops of the link and physical layer according to the OSI protocol stack, which - without being considered as binding for scope of the present invention - is referred to as mobile ad-hoc communication network or equivalently MANET in the following. However, generally it should be noted that the present invention is also applicable to any other different type of wireless communication network as long as it supports a routing protocol on the network layer as outlined in the following.

As shown in Fig. 2, peer-to-peer mobile ad-hoc networks have two challenges in common: peer detection and packet routing. To meet these challenges, synergies between peer-to-peer networks and mobile ad-hoc communication networks reduce the administrational effort and increase performance and reliability of the mobile peer-to-peer protocol.

As shown in Fig. 2, in more detail the peer-to-peer protocol allows peers to directly exchange data and therefore this protocol is responsible of service-related data, e.g., files, in the peer-to-peer network. The mobile peer-to-peer protocol has capability to perform data uploads and downloads, e.g., on the basis of HTTP. In the case of interrupted transmissions due to broken links, a content range header provides the ability to resume the file transfer. According to the present invention, HTTP is applied as one example of its rich set of features and numerous standard implementations available in different computer languages. However, any other protocol of the same functionality may be applied as well.

Further, the extended dynamic source routing protocol has new request and reply types to existing network layer protocols, e.g., the DSR protocol. Therefore, the extended dynamic source routing protocol provides means to find peers by other criteria than simply an IP address. Nevertheless, the extended network layer routing protocol EDSR does not change the basic behavior of previously known dynamic source routing protocols, so that EDSR nodes can be an integral part of old existing DSR networks.

Further, the mobile peer control protocol links the extended dynamic source routing protocol and the network layer with the peer-to-peer application in the application layer. Using the mobile peer control protocol, the application may register in the extended dynamic source routing layer to initialize search requests and to process incoming search requests from other nodes in the wireless communication networks, as will be explained in detail in the following. In other words, the mobile peer control protocol is the cross- or interlayer-communication channel between the application and the network layer. It communicates all incoming and outgoing requests and responses to the corresponding protocol, except the file exchange itself.

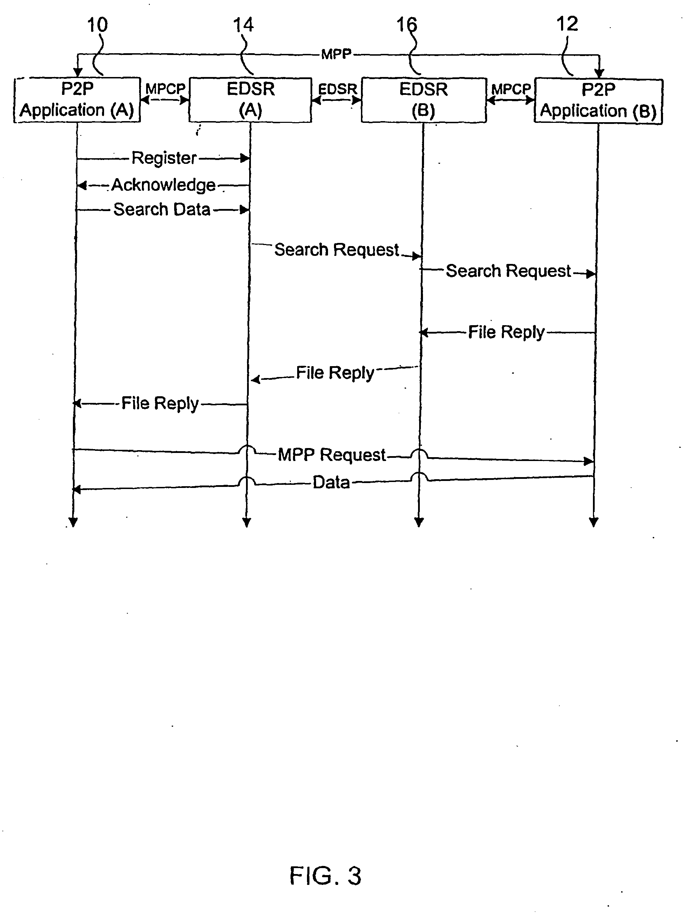

Fig. 3 shows a message sequence chart for data search and download/upload in a mobile peer-to-peer network according to the present invention.

The units peer-to-peer application (A) 10 and peer-to-peer application (B) 12 shown in Fig. 3 relate to peer-to-peer applications A and B running in the mobile communication environment, which applications actuate a communication channel for exchange of data, as will be explained in the following. Further, the additional units EDSR (A) and EDSR (B) 14 and 16 relate to functionalities implemented on the network communication protocol layer, with respect to the peer-to-peer application (A) and the peer-to-peer application (B), respectively.

As shown in Fig. 3, exchange, either of control-related data or payload data, is represented by error lines in the form of a sequence chart.

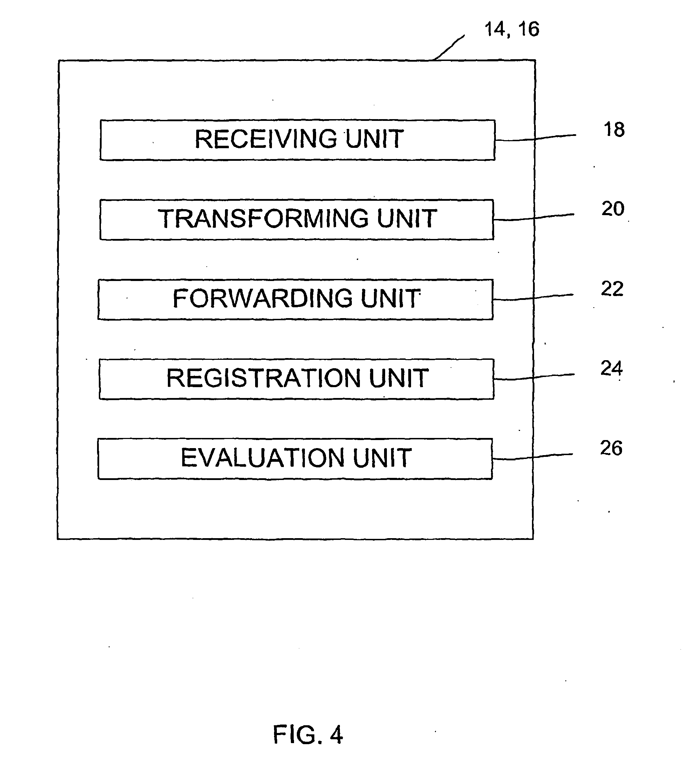

In the following, the detailed aspects of the network protocol layer implementations and functionalities will be explained with respect to Figs. 4 to 6.

### Extended Dynamic Source Routing Protocol

Fig. 4 shows a schematic diagram of the EDSR (A) and (B). According to the present invention, it may be assumed that each such unit is operated at a node in a wireless communication network for implementation of related extended dynamic source routing protocol functionality at each such node.

As shown in Fig. 4, each such extended dynamic source routing protocol unit (A) divides into a receiving unit 18, a transforming unit 19, and a forwarding unit 20.

Operatively, the first Interface unit 18 is adapted to receive search-related data in relation to a service request initiated through a service running on top of the mobile peer-to-peer layer protocol, i.e. the peer-to-peer application (A). Further, the transforming unit 20 is adapted to transform the submitted search-related data into a query message in accordance with the network layer routing protocol EDSR. As outlined previously, according to the present invention it is proposed that the query message comprises search criteria extending beyond simple address information, i.e. criteria specifying aspects of proximity to the node initiating a search for service resources or type of such service resources, i.e. type of data or type of service. Further, operatively the forwarding unit 22 is adapted to output the query term to the lower layers for spread-out through the wireless communication network in search of service resources.

Typical examples of search criteria in the sense of the present invention would be that services are located to the nearest extent in, e.g., a wireless ad-hoc communication network for minimization of subsequent data transfer traffic, or indication of type of service, e.g., restaurant, banking, parking, etc. Examples given in more detail for the query message are related to the search request SREQ, to a Hash request HREQ, to a file reply FREP, to a push request PREQ, and to a declaration reply DREP and are explained in detail in the following.

As shown in Fig. 3 in combination with Fig. 4, operatively the extended dynamic source routing protocol will receive a registration of a peer-to-peer application and then acknowledge receipt of such registration. Operatively, this is achieved by the registration unit 24 shown in Fig. 4.

Further, subsequent hereto and after set-up of the query message, the forwarding unit 22 is also adapted to receive a response to the query message initiated from the further node (B) in the wireless communication network. Heretofore, in each implementation of the extended dynamic source routing protocol (A) and (B), the receiving unit 18 and the forwarding unit 22 are adapted for exchange of query messages flowing in the wireless network infra-structure from the network protocol layer to the peer-to-peer application level for evaluation of the different query messages on the application level. Depending on the outcome of the evaluation, i.e. whether the search criteria are met by a service operated at the related node or not, there may be generated a search response which is subsequently forwarded down from the peer-to-peer application level to the extended dynamic source routing level for forwarding to the node which initiated the search request, referred to as the sending node in the following.

The related different search responses are file reply, push request, and declaration reply.

A further aspect being related to the search and being achieved by the evaluation unit 26 shown in Fig. 4 is the evaluation of different search requests when a plurality of search responses are received at a node initiating a search. Here, the evaluation unit 26 is adapted to process at least one predetermined cost function, e.g., characteristics of at least one node in a path of the wireless network connecting the sending node and the responding node. Typical examples of the characteristics are number of nodes in the path, transmission power of a node, moving speed of a node, or transfer of a node, respectively.

In the following, different instantiations of the query messages referred to above will be explained. Heretofore, there will be differentiated between an IP field implementing standard functionality, an the fields being related to the search criteria according to the present invention.

### Search Request (SREQ):

To search for data, EDSR offers a similar message like the Gnutella QUERY-message, namely the *Search Request* (SREQ). SREQ is the initial option for data searches in the mobile P2P network. SREQ is based on the DSR option Route Request (RREQ). A SREQ expects as an answer an option of the type REPLY (xREP). What kind of REPLY EDSR expects depends on the service and the data-type originally requested.

Table 2-1 shows SREQ in its bit structure, and the SREQ field are explained below.

**Table 2-1: EDSR-SREQ option**

| Byte 1 | Byte 2 | Byte 3 | Byte |
|---|---|---|---|
| Option Type | Option Data Length | Identification | |
| Service Type | | Klen | Reserved |
| Keyword [1] | | | |
| Keyword [2] | | | |
| . . . | | | |
| Keyword [k] | | | |
| Address [1] | | | |
| Address [2] | | | |
| · · · | | | |
| Address [h] | | | |

***IP Field***

| | |
|---|---|
| Source Address | The IP address of the node originates this packet. Intermediate nodes that retransmit the packet to propagate the SREQ must not change this field. |
| Destination Address | IP limited broadcast address (255.255.255.255) |
| Hop Limit | 8-bit unsigned integer, which indicates the time-to-live (TTL) for the packet |

***SREQ Field***

| | |
|---|---|
| Option Type | 32 |
| Option Data Length | 8-bit unsigned integer, length of the option in octets, excluding the Option Type and Option Data Length fields. |
| Identification | 16-bit, a unique value generated by the initiator (original sender) of the Search Request. This value allows a receiving node to determine whether it has recently seen a copy of this Search Request: If this Identification value is found by this receiving node in its Search Request Table, this receiving node must discard the Search Request to avoid loops during the forwarding of the SREQ packet. |
| Service Type | 16-bit Hash-value of the Service that we want to look for. It can be, e.g., 'Audio', 'Video', 'Taxi' or something similar. |
| Klen | 4-bit value, which indicates the number of Keywords in this option. The maximum number of Keywords is therefore 15. |
| Keyword | Keyword [i] is 32-bit Hash-value of the string, which specifies a search criterion for a previously selected Service Type. The following keywords restrict the criteria further. Thus, it is AND operator. |
| Address | Address [i] is the IP address of the i^{th} node recorded in the Search Request option. This field is used to determine the route in the wireless communication network. |

### Hash Request (HREQ):

The *Hash* Request (HREQ) is a special variant of the SREQ. However, HREQ is using as search criteria only the file size and the *Fingerprint* of the requested data. This Fingerprint is 128 bits long and is created with the MD5 hashing procedure. With this specific attribute, HREQ can be used to find alternative data sources in case of route breaks. Like SREQ, HREQ is also based on the DSR-option RREQ.

Table 2-2 shows HREQ in its bit structure, and the HREQ fields are explained below.

**Table 2-2: EDSR-HREQ option**

| Byte 1 | Byte 2 | Byte 3 | Byte |
|---|---|---|---|
| Option Type | Option Data Length | Identification | |
| Service Type | | Reserved | |
| File Size | | | |
| . MD5 Hash . | | | |
| Address [1] | | | |
| Address [2] | | | |
| · · · | | | |
| Address [n] | | | |

### IP Field

| | |
|---|---|
| Source Address | The IP address of the node originates this packet. Intermediate nodes that retransmit the packet to propagate the HREQ must not change this field. |
| Destination Address | IP limited broadcast address (255.255.255.255) |
| Hop Limit | 8-bit unsigned integer, which indicates the time-to-live (TTL) for the packet. |

***HREQP Field***

| | |
|---|---|
| Option Type | 33 |
| Option Data Length | 8-bit unsigned integer. Length of the option in octets, excluding the Option Type and Option Data Length fields. |
| Identification | 16-bit, a unique value generated by the initiator (original sender) of the Search Request. This value allows a receiving node to determine whether it has recently seen a copy of this Search Request: If this Identification value is found by this receiving node in its Search Request Table, this receiving node must discard the Hash Request to avoid a loops during the forwarding of the HREQ packet. |
| Service Type | 16-bit Hash-value of the Service that we want to look for. It can be, for example, 'Audio', 'Video', 'Taxi' or something similar. |
| File Size | 32-bit value, which indicates the size of data in octets. |
| MD5 Hash | 128-bit Hash value, which is created with the MD5 procedure. This value together with the File Size identify the file clearly in the peer-to-peer Network. |
| Address | Address [i] is the IP address of the i^{th} node which received this message. This field is used to determine the route in the MANET. |

### File Reply (FREP):

The option *File Reply* (FREP) is the answer of a peer on a received of a search request. The search request can be therefore a SREQ or HREQ, which matches the metadata of the object shared by the peer. A FREP implies that the requested data is a file and therefore includes all necessary information about that shared file. Based on this information, the requesting peer can initialise a transmission of the file, which the help of mobile peer-to-peer protocol. As in the case of SREQ, the structure of a FREP is based on the structure of a Route *Reply* (RREP) option of the network layer protocol DSR.

Table 2-3 shows FREP in its bit structure, and the FREP fields are explained below.

**Table 2-3: EDSR-FREP option**

| Byte 1 | Byte 2 Byte 3 | Byte | |
|---|---|---|---|
| Option Type | Option Data Length | L | Reserved |
| File Size | | | |
| TCP Port | U | | Reserved |
| Keywords Sum | | | |
| . MD5 Hash . | | | |

| File Name Length | File Name | | |
|---|---|---|---|
| · · · | | | |
| Address [1] | | | |
| Address [2] | | | |
| . . . | | | |
| Address [n] | | | |

### IP Field

| | |
|---|---|
| Source Address | The IP address of the node originates this packet. |
| Destination Address | Contains the address of the node that originates the SREQ/HREQ. This address can be copied from the Source Address field of the SREQ/HREQ. |

### FREP Field

| | |
|---|---|
| Option Type | 48 |
| Option Data Length | 16-bit unsigned integer, length of the option in octets, excluding the Option Type and Option Data Length fields. |
| L | 1-bit flag, states whether the last hop is out of the EDSR network, to enable interaction with other networks. |
| File Size | 32-bit value, which indicates the size of the found file. |
| TCP Port | TCP port (1-65535), through which the service of the peer is reachable. Over this port, an MPP communication with this peer is possible. |
| U | 1-bit flag, specifies whether the providing peer also allows uploads. |
| Keywords Sum | Bit-wise addition of all the Keywords in SREQ. This sum can be used as a match code of the request and the response. |
| MD5 Hash | 128-bit Hash value, which is created with the MD5 hashing procedure. This value together with the File Size identify the file clearly in the peer-to-peer Network. |
| File Name Length | 8-bit'value, indicates the length of the following File Name. The File Name therefore can contain up to 255 characters. |
| File Name | Name of the file. |
| Address | Address [i] is the IP address of the i^{th} node which received this message. The FREP therefore contains the full path, from the sending node S to the receiving node R. |

### Push Request (PREQ):

The option *Push Request* (PREQ) is sent from the responding node to the sending node for subsequent data upload from the sending node to the responding node.

Table 2-4 shows PREQ in its bit structure, and the PREQ fields are explained below.

**Table 2-4: EDSR-PREQ option**

| Byte 1 | Byte 2 | Byte 3 | Byte | |
|---|---|---|---|---|
| Option Type | Option Data Length | | L | Reserved |
| TCP Port | | Reserved | | |
| File Size | | | | |
| . MD5 Hash . | | | | |
| Address [1] | | | | |
| Address [2] | | | | |
| · · · | | | | |
| Address [n] | | | | |

### IP Field

| | |
|---|---|
| Option Type | 49 |
| Source Address | The IP address of the node, which generates the PREQ. |
| Destination Address | Contains the IP address of the node that originates the FREP. This address can be copied from the Source Address field of the FREP. |

### PREQ Field

| | |
|---|---|
| Option Type | 49 |
| Option Data Length | 16-bit unsigned integer, length of the option in octets, excluding the Option Type and Option Data Length fields. |
| L | 1-bit flag, states whether the last hop is out of the EDSR network, to enable interaction with other networks. |
| TCP Port | TCP port (1-65535), through which the service of the peer is reachable. Over this port, an MPP communication with this peer is possible. |
| File Size | 32-bit value, which indicates the size of the found file. |
| MD5 Hash | 128-bit Hash value, which is created with the MD5 hashing procedure. This value together with the File Size identify the file clearly in the peer-to-peer Network. |
| Address | Address [i] is the IP address of the i^{th} node which received this message. The PREQ therefore contains the full path, from the sending node S to the receiving node R. This path should be the same path that carried the FREP. |

### Declaration Reply (DREP):

The option *Declaration Reply* (DREP) is the answer of the peer upon receiving a search request. The search request can be SREQ or HREQ. DREP is a general option of network layer protocol EDSR and offers application developers the possibility to implement protocols beyond MPP to satisfy the requirement of their specific application. DREP therefore does not transmit specific information about the offered service, but information about the profile of the service. Thus, mobile peer-to-peer protocol MPP can transmit the profile, which holds all necessary information to establish a communication channel between two Peers. DREP is a special mode of a FREP and does not differ in its bit structure. The data information in the DREP refers to the service profile.

### IP Field

| | |
|---|---|
| Source Address | The IP address of the node, which generates the DREP |
| Destination Address | Contains the address of the node that originates the SREQ/HREQ. This address can be copied from the Source Address field of the SREQ/HREQ. |

### DREQ Field

| | |
|---|---|
| Option Type | 50 |
| Option Data Length L | 16-bit unsigned integer, length of the option in octets, excluding the Option Type and Option Data Length fields. 1-bit flag, states whether the last hop is out of the EDSR network, to enable interaction with other networks. |
| File Size | 32-bit value, specify the size of the profile in octets. |
| TCP Port | TCP port (1-65535), through which the service of the peer is reachable. Over this port, an MPP communication with this peer is possible. |
| Keywords Sum | Bit-wise addition of all the Keywords in SREQ. This sum can be used as a match code of the request and the response. |
| MD5 Hash | 128-bit Hash value, which is created with the MD5 procedure. This value together with the File Size identify the file clearly in the P2P Network. |
| File Name Length | 8-bit value, indicates the length of the following profile name. The profile name therefore can obtain up to 255 characters. |
| File Name Address | Name of the data. Address [i] is the IP address of the i^{th} node which received this message. The FREP therefore contains the full path, from the sending node S to the receiving node R. |

### Mobile Peer-to-Peer Protocol

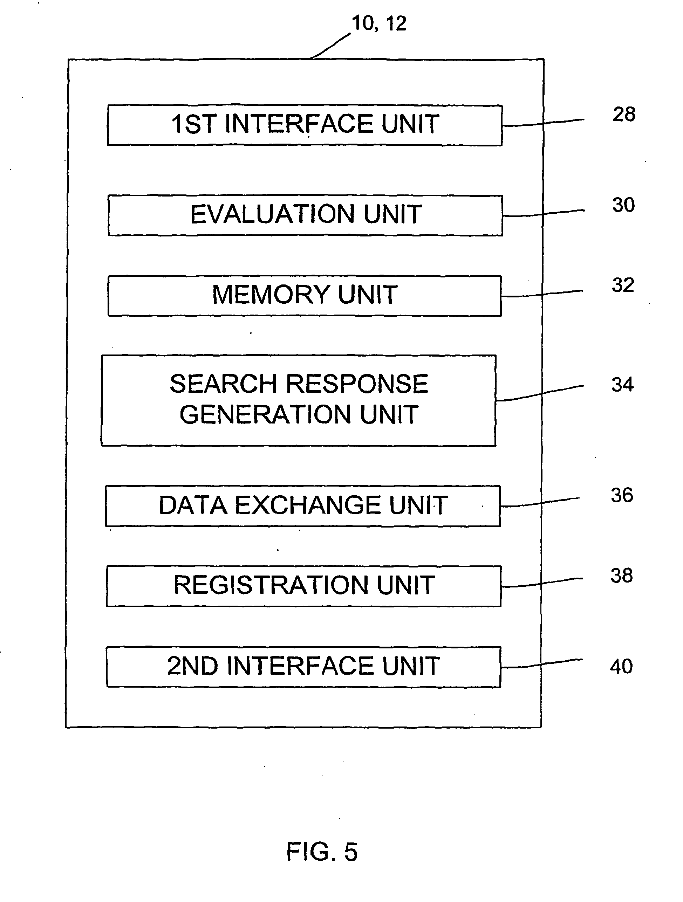

Fig. 5 shows a schematic diagram illustrating functionalities on the level of the mobile peer-to-peer layer protocol.

As shown in Fig. 5, on this layer protocol layer, functionality is related and implemented by a first interface unit 28, an evaluation unit 30, a memory unit 32, a search response generation unit 34, a data exchange unit 36, a registration unit 38, and a second interface unit 40.

Operatively, the first interface unit is adapted to receive a service request comprising search criteria extending beyond node address information. Here, it should be noted that the service request is generated in a service operated on top of the mobile peer-to-peer network protocol.

Further, operatively the second interface unit is adapted to exchange the service request with the network layer routing protocol operated under the mobile peer-to-peer network protocol for identification of shared service resources in the wireless network. The second interface unit 40 is also adapted to receive a service request from the network layer routing protocol that may be initiated at a remote node for forwarding this service request up to the service running on top of the mobile peer-to-peer protocol for evaluation thereof.

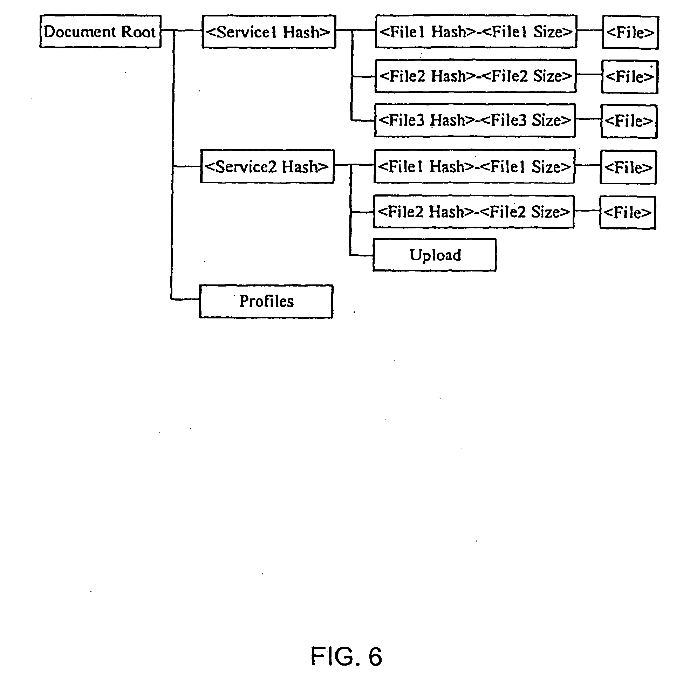

Further, operatively the evaluation unit 30 is adapted to evaluate the search request on the level of the mobile peer-to-peer network protocol. Heretofore, there is also provided a memory unit 33 storing a classification of peer-to-peer services into different types as basis of evaluation. Heretofore, the evaluation unit is adapted to classify mobile peer-to-peer services into different types by using a directory structure for the search of services resources as shown in Fig. 6.

Operatively, the search response generation unit 34 shown in Fig. 6 generates a search response for subsequent forwarding through the second interface unit 40 when the evaluation of the search request on the level of the mobile peer-to-peer network protocol identifies fulfillment of search criteria.

Further aspects of functionality on the mobile peer-to-peer protocol level are related to the operation after successful search.

Heretofore, the data exchange unit 36 is adapted to direct exchange on the mobile peer-to-peer protocol layer after exchange of a search request and search response having identified a path/route in the wireless mobile communication network for exchange of data. Also, operatively the data exchange unit 36 is adapted to connection recovery after connection breakdown, should it occur. Preferably, the direct data exchange according to the present invention is achieved through data download and/or data upload, preferably on the basis of HTTP.

Another unit being directly related to the search is a registration unit 38 shown in Fig. 6 which allows to register a mobile peer-to-peer service at the network layer routing protocol and to receive a combination of registration subsequent to submission of a registration request for subsequent exchange of search-related messages, as outlined above.

### Mobile Peer-to-Peer Control Protocol

A further aspect of the present invention is related to the exchange of information between the mobile peer-to-peer protocol level and the network layer routing protocol. Heretofore, and as shown in Fig. 5, the mobile peer control protocol has an upper layer implementing functionality on the mobile peer-to-peer protocol layer level and a lower layer level implementing mobile peer control protocol functionality at the level of the network layer routing protocol. In the following, the upper layer will also be referred as MPCP7, and the lower layer will be referred to as MPCP3.

The Mobile Peer Control Protocol is a synchronous protocol to provide a communication channel between the service layer and network layer. MPCP must be implemented therefore on the one hand in OSI layer 3 and on the other hand by the respective service in OSI layer 7. Thus, MPCP3 and MPCP7 are defined respectively.

The necessity for the development of the mobile peer control protocol MPCP results from the functions offered by a service. Services do not only offer data, but they also have to decide, whether to answer a search request positively or not, i.e. whether the service shares a requested file. In case of a positive answer, the service has to communicate the necessary information to the EDSR, so that a FREP can be sent to the requesting peer accordingly. MPCP therefore has to fulfil the following tasks:
- **Registration:** As one Peer can implement several services, every service has to register at the network layer, so that the network layer can notify the service about the incoming search request accordingly. When a user removes the services, the service has to deregister at the network layer.
- **Search:** If a service offers its user the possibility to search for data in the wireless communication network, MPCP has to forward the search parameters to the network layer protocol EDSR via MPCP3.
- **Request**: MPCP3 transmits incoming request to MPCP7 and then to the services. MPCP also transmits the suitable responses to the network layer protocol EDSR.
- **Response:** MPCP3 informs the MPCP7 about incoming responses and then initiates actions at the network layer.protocol EDSR accordingly.

For these tasks, according to the present invention, there are defined several messages with their specific parameters, like confirmation messages, registration messages,..request messages and response messages.

In the following, the MPCP messages with their parameters and the expected answers are specified as follows:

### Confirmation Message - ACK (Acknowledgement)

The message ACK acknowledges the message that it successfully receives.

| | |
|---|---|
| Message format: | ACK([Id]) |
| Sender: | MPCP3/MPCP7 |
| | |
| Id: | Unique identifier of the service, which was used to register with MPCP3 before. This parameter is only used for messages from MPCP3, in order to specify which MPCP7 service is the receiver of this message |
| | |
| Answer: | N/A |

### Confirmation Message - NAK (Negative Acknowledgement)

The message NAK acknowledges the message, which produces no errors, but cannot be successfully executed. Reasons for this can be, e.g., user rights, timeouts or something similar. The reason of failure is returned to the sender as number (Code) and as text (Reason) in NAK.

| | |
|---|---|
| Message format : | NAC ([Id], Code, Reason) |
| Sender: | MPCP3/MPCP7 |
| | |
| Id: | Unique identifier of the service, which was used to register with MPCP3 before. This parameter is only used for messages from MPCP3, in order to specify which MPCP7 service is the receiver of this message |
| | |
| Code: | Number, which specifies clearly the failure reason |
| Reason: | Reason of failure, readable by user |
| | |
| Answer: | N/A |

### Confirmation Message - ERR (Error)

The message ERR acknowledges the message, which has error in its format. Reasons for this can be, e.g., conflicts with the registered services, or an incorrect format of a Search Request. The reason of the error will be returned to the sender as number (ErrorCode) and as text (Description).

| | |
|---|---|
| Message format: Sender: | ERR ([Id], ErrorCode, Description) MPCP3/MPCP7 |
| | |
| Id: | Unique identifier of the service, which was used to register with MPCP3 before. This parameter is only used for messages from MPCP3, in order to specify which MPCP7 service is the receiver of this message |
| | |
| ErrorCode: | Number, which specifies clearly the failure reason |
| Description: | Reason of error, readable by user |
| | |
| Answer: | N/A |

### Registration Message - REG (Register)

With the message REG, a service can register itself with MPCP3. This is necessary and usually accomplished when starting services. Registered services can receive, for example, an ISREQ for further processing.

| | |
|---|---|
| Message format: | REG (Id, IP, Port, (Services)) |
| Sender: | MPCP7 |
| | |
| Id: | Unique identifier of the service. It can be, e.g., its process ID, random number, which is generated for instance from the system time and a random function, or a combination of an IP address and Port, which are currently used by services |
| | |
| IP: | The IP address of the service. This is necessary, in case the equipment supports several Network component/IP address |
| Port: | The TCP port, under this, the service is available through the IP address |
| Services: | List of service types. For example, after receiving a search request, only those that are corresponding to the registered service will be forwarded |
| | |
| Answer: | ACK, NAK, ERR |

### Registration Message - DREG (Deregister)

By means of the message DREG, a service can deregister itself with MPCP3 and therefore it will no longer receive any message from MPCP3.

| | |
|---|---|
| Message format: | DREG (Id) |
| Sender: | MPCP3/MPCP7 |
| | |
| Id: | Unique identifier of the service, which was used to register with MPCP3 before |
| | |
| Answer: | ACK, NAK, ERR |

### Search Message - SEQ (Search Request)

Through SREQ, MPCP7 can initiate a search request based on keywords with MPCP3. The MPCP SREQ is transformed into the corresponding SREQ of the EDSR protocol and then it is dropped.

| | |
|---|---|
| Message format: | SREQ (Id, Service, (Keywords)) |
| Sender: | MPCP7 |
| | |
| Id: | Unique identifier of the service, which was used to register with MPCP3 before |
| | |
| Service: | 16-bit Hash value of the string, which specifies a requested service |
| Keywords: | List of 32-bit Hash values, which is used as keywords for the search in the specified service. The Hash value is created from the strings of the search words |
| | |
| Answer: | ACK, NAK, ERR |

### Search Message - ISREQ (Incoming Search Request)

ISREQ is the counterpart of a SREQ. MPCP3 sends an ISREQ message with a detailed EDSR SREQ option to the MPCP7. The respective service can then verify whether it can respond positively to this search request.

| | |
|---|---|
| Message format: | ISREQ (Id, Service, (Keywords)) |
| Sender: | MPCP3 |
| | |
| Id: | Unique identifier of the service, which was used to register with MPCP3 before |
| | |
| Service: | 16-bit Hash value of the string, which specifies a requested service |
| Keywords: | List of 32-bit Hash values, which is used as keywords for the search in the specified Service. The Hash value is created before sending out the EDSR SREQs, from the strings of the search words |
| | |
| Answer: | ACK, NAK, ERR |

### Search Message - HREQ (Hash Request)

By means of a HREQ, a service can initiate an EDSR HREQ, in order to search an alternative source for downloading of the data.

| | |
|---|---|
| Message format: | HREQ (Id, Service, FileSize, Hash) |
| Sender: | MPCP7 |
| | |
| Id: | Unique identifier of the service, which was used to register with MPCP3 before |
| | |
| Service: | 16-bit Hash value of the string, which specifies a requested service. This service corresponds to the Service Type field of the EDSR HREQ option |
| FileSize: | Size of data in Octets |
| Hash: | 128-bit MD5 Hash value over the whole data |
| | |
| Answer: | ACK, NAK, ERR |

### Search Message - IHREQ (Incoming Hash Request):

MPCP3 sends the message IHREQ to MPCP7 as soon as it receives an EDSR HREQ. Then the respective service can react accordingly.

| | |
|---|---|
| Message format: | IHREQ (Id, Service, FileHash, FileSize) |
| Sender: | MPCP3 |
| | |
| Id: | Unique identifier of the service, which was used to register with MPCP3 before |
| | |
| Service: | 16-bit Hash value of the string, which specifies a requested service. Copy from the Service Type field of the EDSR HREQ option |
| FileHash: | 128-bit MD5 Hash value over the whole data |
| FileSize: | Size of data in Octets |
| | |
| Answer: | ACK, NAK, ERR |

### Response Message - FREP (File Reply)

FREP is the positive answer of services on receiving a search request of the form ISREQ or IHREQ, if the corresponding data as files are available. MPCP3 can create an EDSR FREP based on the information of the data of the registered service, such as IP address and TCP port.

| | |
|---|---|
| Message format: | (Id, FileHash, FileName, FileSize, Upload) |
| Sender: | MPCP7 |
| | |
| Id: | Unique identifier of the service, which was used to register with MPCP3 before |
| | |
| FileHash: | 128-bit MD5 Hash value over the whole file |
| FileName: | Name of the file |
| FileSize: | Size of the file in Octets |
| Upload: | Bool value, which indicates whether upload on the MPP servers is possible |
| | |
| Answer: | ACK, NAK, ERR |

### Response Message - IFREP (Incoming File Reply)

IFREP is the counterpart of FREP. IFREP is sent with a detailed information of EDSR FREP option by MPCP3 to MPCP7. Based on this information, the service can initialise a data transfer over MMP.

| | |
|---|---|
| Message format: | IFREP (Id, IP, Port, FileHash, FileName, FileSize, Upload) |
| Sender: | MPCP3 |
| | |
| Id: | Unique identifier of the service, which was used to register with MPCP3 before |
| IP: | IP address of the offered service |
| Port: | TCP port, over this the service can be obtained |
| FileHash: | 128-bit MD5 Hash value over the whole file |
| FileName: | Name of the file |
| FileSize: | Size of the file in Octets |
| Upload: | Bool value, which indicates whether upload on the MPP servers is possible |
| | |
| Answer: | ACK, NAK, ERR |

### Response Message - PREQ (Push Request) :

After receiving a FREP, mobile peer-to-peer protocol MPP will try to set up a direct connection to the provided Peer over the given TCP port. If it is not possible, as the case of the providing Peer is behind a Firewall, and the providing Peer allows upload (U-flag in FREP), MPCP7 will send a PREQ message to MPCP3 to initiate an EDSR PREQ. The PREQ informs the providing Peer that it cannot initiate an MPP download over the provided port, so please upload the file instead. With PREQ all necessary data are provided, which is necessary for an upload.

| | |
|---|---|
| Message format: | PREQ (Id, FileHash, FileSize) |
| Sender: | MPCP7 |
| | |
| Id: | Unique identifier of the service, which was used to register with MPCP3 before |
| | |
| FileHash: | 128-bit MD5 Hash. This value together with FileSize specifies the file clearly in the P2P network |
| FileSize: | Size of the file in Octets |
| | |
| Answer: | ACK, NAK, ERR |

### Response Message - IPREQ (Incoming Push Request)

The IPREQ is the counterpart of the PREQ. It contains information about the requested file that need to be uploaded. It is sent by MPCP3 to MPCP7 on receiving of an EDSR PREQ. Then the service can initiate an upload over mobile peer-to-peer protocol MPP.

| | |
|---|---|
| Message format: | IPREP (Id, IP, Port, FileHash, FileSize) |
| Sender: | MPCP3 |
| | |
| Id: | Unique identifier of the service, which was used to register with MPCP3 before |
| IP: | IP address of the requesting service |
| Port: | TCP port, over which the service can be uploaded |
| FileHash,: | 128-bit MD5 Hash value over the whole file |
| FileSize: | Size of the file in Octets |
| | |
| Answer: | ACK, NAK, ERR |

### Response Message - DREP (Description Reply)

DREP requests to send out an EDSR DREP message. It is sent from MPCP7 to MPCP3 and it is the positive answer to a received ISREQ or IHREQ. MPCP3 provides necessary information about the registered service, such as IP address and TCP port to create an EDSR DREP.

| | |
|---|---|
| Message format: | PREP (Id, ProfileHash, ProfileName, ProfileSize) |
| Sender: | PCP7 |
| | |
| Id: | Unique identifier of the service, which was used to register with MPCP3 before |
| ProfileHash: | 128-bit MD5 Hash value over the profile data |
| ProfileName: | Name of the profile |
| ProfileSize: | Size of the profile in Octets |
| | |
| Answer: | ACK, NAK, ERR |

Further to the above, the proposed protocol stack according to the present invention was also simulated in SDL to prove its function. In particular, simulation with five nodes was performed. These investigations and related comparisons to pre-existing solutions, in particular Gnutella show a significant improvement in performance of the protocol stack according to the present invention over traditional peer-to-peer protocols used over ad-hoc networks. In more detail, the overhead per successful file search was 4850 bytes for Gnutella and 1966 bytes for MPP, and further the background traffic was 2,43 kbit/s for Gnutella and 0,029 kbit/s for MPP.

## Claims

1. Method of processing service requests for use in a mobile peer to peer network comprising a service requesting mobile node of a wireless network, the mode implementing a protocol stack compring a network layer routing protocol (EDSR) provided for routing between mobile nodes in the wireless network and a mobile peer-to-peer network protocol (MPP) located on top of the network layer routing protocol (EDSR), ***characterised by*** the steps :
- receiving a service request comprising search criteria specifying aspects of proximity to the service requesting mobile node or a type of service resources at the mobile peer-to-peer network protocol layer (MPP) from a mobile peer-to-peer application (10) running on top of the mobile peer-to-peer network protocol layer;
- forwarding the service request to the network layer routing protocol (EDSR) layer and transforming the search criteria into a query message in accordance with the network layer routing protocol (EDSR) ; and
- forwarding the query message to at least one further mobile node in the wireless network using the network layer routing protocol
where in the method further comprises a step of receiving a search response to the service request at the service requesting mobile node, wherein the search response (FREP) comprises path information with respect to a path in the wireless network connecting the service requesting mobile node and the service providing mobile node, and evaluating different search results according to at least one pre-determined cost function when a plurality of the search responses are received,
wherein the at least one pre-determined cost function evaluates characteristics of at least one mobile node in a path of the wireless network connecting the service requesting mobile node and the service providing mobile node.

2. Method according to claim 1, **characterized in that** the query message (HREQ) is related to search of data and the query message (HREQ) specifies file size and fingerprint information with respect to searched data.

3. Method according to claim 1 or 2, ***characterized in that*** it further comprises the steps of:
- receiving the query message at a further service providing mobile node of the wireless network;
- forwarding the query message to the mobile peer-to-peer network protocol layer (MPP) at the service providing mobile node according to the network layer routing protocol (EDSR);
- receiving an evaluation from an evaluation unit on the level of a peer-to-peer network protocol layer (MPP) whether search criteria are fulfilled or not; and
- sending said search response to the service requesting mobile node in the wireless network where the search was initiated when at least one search criteria is fulfilled.

4. Mobile node adapted to be operated in a wireless network and run on a protocol stack comprising a network layer routing protocol (EDSR) provided for routing between mobile nodes of the wireless network and a mobile peer-to-peer network protocol (MPP) located on top of the network layer routing protocol (EDSR), ***characterized by*** :
- a first interface unit (18) adapted to receive a service request comprising search criteria specifying aspects of proximity to the service requesting mobile node or a type of service resources at the mobile peer-to-peer network protocol layer (MPP) from a mobile peer-to-peer application (10) running on top of the mobile peer-to-peer network protocol layer (MPP);
- a second interface unit (22) adapted to forward the service request to the network layer routing protocol (EDSR) layer;
- a transforming unit (20) adapted to transform the search criteria into a query message in accordance with the network layer routing protocol; and
- a forwarding unit (22) adapted to forward the query message to at least one further mobile node in the wireless network using the network layer routing protocol (EDSR) for identification of a service providing mobile node.
wherein the forwarding unit (22) is adapted to receive a search response, wherein the search response (FREP) comprises path information with respect to a path in the wireless network connecting the mobile node and the service providing mobile node sending the search response, which path information is used by the second interface unit (22) during data exchange following search;
and wherein the mobile node further comprises a second evaluation unit (26) adapted to evaluate different search results when a plurality of the search responses are received, wherein the second evaluation unit (26) is adapted to process at least one pre-determined cost function which reflects characteristics of at least one mobile node in a path of the wireless network connecting the mobile node and the service providing mobile node.

5. Mobile node according to claim 4 ***characterized in that*** the transforming unit (20) is adapted to transform the search related data into a query message (HREQ) being related to search of data and the query message (HREQ) specifies a file size and fingerprint information with respect to searched data.

6. Mobile node according to claim 4 or 5 ***characterized in that***
- the second interface unit is adapted to receive a search request from the network layer routing protocol (EDSR) layer;
wherein the mobile node comprises:
- an evaluation unit (30) adapted to evaluate the service request on the level of the mobile peer-to-peer-protocol layer and to identify a fulfilment of at least one of the search criteria; and
- a search response generation unit (34) adapted to generate a search response and to forward the search response to the second interface unit when search criteria are fulfilled; and
- a forwarding unit (22) adapted to send the search response to a service requesting mobile node in the wireless network where the search was initiated.

7. A computer readable medium for storing a computer program comprising instructions which when executed by one or more computers cause the one or more computers to perform each of the method steps of claims 1-3.

## Patentansprüche

1. Verfahren eines Verarbeitens von Dienstanfragen zur Verwendung in einem Mobil-Peer-to-Peer-Netzwerk mit einem Dienst-anfragenden Mobilknoten eines drahtlosen Netzwerkes, wobei der Knoten einen Protokollstapel mit einem Netzwerkschicht-Routingprotokoll (EDSR), das zum Routing zwischen Mobilknoten in dem drahtlosen Netzwerk (MPP) bereitgestellt ist und einem Mobil-Peer-to-Peer-Netzwerkprotokoll (MPP) umfasst, das auf dem Netzwerkschicht-Routingprotokoll (EDSR) angeordnet ist, **gekennzeichnet durch** die Schritte:
- Empfangen einer Dienstanfrage mit Suchkriterien, die Aspekte einer Nähe zu dem Dienst-anfragenden Mobilknoten spezifiziert oder eines Typs von Dienstressourcen an der Mobil-Peer-to-Peer-Netzwerkprotokollschicht (MPP) von einer Mobil-Peer-to-Peer-Anwendung (10), die auf der Mobil-Peer-to-Peer-Netzwerkprotokollschicht läuft;
- Weiterleiten der Dienstanfrage an die Netzwerkschicht-Routingprotokoll-(EDSR)-Schicht und Umwandeln der Suchkriterien in eine Abfragenachricht gemäß dem Netzwerkschicht-Routingprotokoll (EDSR); und
- Weiterleiten der Abfragenachricht an zumindest einen weiteren Mobilknoten in dem drahtlosen Netzwerk unter Verwendung des Netzwerkschicht-Routingprotokolls,
wobei das Verfahren weiter einen Schritt eines Empfangens einer Suchantwort auf die Dienstanfrage an dem Dienst-anfragenden Mobilknoten umfasst, wobei die Suchantwort (FREP) Pfadinformation bezüglich eines Pfades in dem drahtlosen Netzwerk umfasst, das den Dienst-anfragenden Mobilknoten und den Dienst-bereitstellenden Mobilknoten verbindet, und
eines Evaluierens unterschiedlicher Suchergebnisse gemäß zumindest einer vorbestimmten Kostenfunktion, wenn eine Vielzahl der Suchantworten empfangen werden, wobei die zumindest eine vorbestimmte Kostenfunktion Eigenschaften von zumindest einem Mobilknotens in einem Pfad des drahtlosen Netzwerkes evaluiert, das den Dienst-anfragenden Mobilknoten und den Dienst-bereitstellenden Mobilknoten verbindet.

2. Verfahren nach Anspruch 1, **dadurch gekennzeichnet, dass** die Abfragenachricht (HREQ) eine Suche von Daten betrifft und die Abfragenachricht (HREQ) eine Dateigröße und Fingerabdruckinformation bezüglich gesuchter Daten spezifiziert.

3. Verfahren nach Anspruch 1 oder 2, **dadurch gekennzeichnet, dass** dieses weiter die Schritte umfasst:
- Empfangen der Abfragenachricht an einem weiteren Dienst-bereitstellenden Knoten des drahtlosen Netzwerkes;
- Weiterleiten der Abfragenachricht an die Mobil-Peer-to-Peer-Netzwerkprotokollschicht (MPP) an dem Dienst-bereitstellenden Mobilknoten gemäß dem Netzwerkschicht-Routingprotokoll (EDSR);
- Empfangen einer Evaluation von einer Evaluationseinheit auf der Ebene einer Peer-to-Peer-Netzwerkprotokollschicht (MPP), ob Suchkriterien erfüllt sind oder nicht; und
- Senden der Suchantwort an den Dienst-anfragenden Mobilknoten in dem drahtlosen Netzwerk, bei dem die Suche initiiert wurde, wenn zumindest ein Suchkriterium erfüllt ist.

4. Mobilknoten, angepasst in einem drahtlosen Netzwerk betrieben zu werden und auf einem Protokollstapel laufen gelassen zu werden, der ein Netzwerkschicht-Routingprotokoll (EDSR), das zum Routing zwischen Mobilknoten des drahtlosen Netzwerkes (MPP) bereitgestellt ist und ein Mobil-Peer-to-Peer-Netzwerkprotokoll (MPP) umfasst, das auf dem Netzwerkschicht-Routingprotokoll (EDSR) angeordnet ist, **gekennzeichnet durch**:
- eine erste Schnittstelleneinheit (18), die angepasst ist, eine Dienstanfrage mit Suchkriterien, die Aspekte einer Nähe zu dem Dienst-anfragenden Mobilknoten spezifizieren oder einen Typ von Dienstressourcen an der Mobil-Peer-to-Peer-Netzwerkprotokollschicht (MPP) von einer Mobil-Peer-to-Peer-Anwendung (10) zu empfangen, die auf der Mobil-Peer-to-Peer-Netzwerkprotokollschicht (MPP) läuft;
- eine zweite Schnittstelleneinheit (22), die angepasst ist, die Dienstanfrage an die Netzwerkschicht-Routingprotokoll-(EDSR)-Schicht weiterzuleiten;
- eine Umwandlungseinheit (20), die angepasst ist, die Suchkriterien in eine Abfragenachricht gemäß dem Netzwerkschicht-Routingprotokoll umzuwandeln; und
- eine Weiterleitungseinheit (22), die angepasst ist, die Abfragenachricht an zumindest einen weiteren Mobilknoten in dem drahtlosen Netzwerk unter Verwendung des Netzwerkschicht-Routingprotokolls (EDSR) zur Identifikation eines Dienst-bereitstellenden Knotens weiterzuleiten,
wobei die Weiterleitungseinheit (22) angepasst ist, eine Suchantwort zu empfangen, wobei die Suchantwort (FREP) Pfadinformation bezüglich eines Pfades in dem drahtlosen Netzwerk umfasst, das den Dienst-anfragenden Mobilknoten und den Dienst-bereitstellenden Mobilknoten verbindet, der die Suchantwort sendet, wobei die Pfadinformation durch die zweite Schnittstelleneinheit (22) während einem Datenaustausch verwendet wird, der einer Suche folgt,
und wobei der Mobilknoten weiter eine zweite Evaluationseinheit (26) umfasst, die angepasst ist, unterschiedliche Suchergebnisse zu evaluieren, wenn eine Vielzahl der Suchantworten empfangen werden, wobei die zweite Evaluationseinheit (26) angepasst ist, zumindest eine vorbestimmte Kostenfunktion zu verarbeiten, die Eigenschaften von zumindest einem Mobilknoten in einem Pfad des drahtlosen Netzwerkes widerspiegelt, das den Mobilknoten und den Dienst-bereitstellenden Mobilknoten verbindet.

5. Mobilknoten nach Anspruch 4, wobei die Umwandlungseinheit (20) angepasst ist, die suchbezogenen Daten in eine Abfragenachricht (HREQ) umzuwandeln, die sich auf eine Suche von Daten bezieht und die Abfragenachricht (HREQ) eine Dateigröße und Fingerabdruckinformation bezüglich der gesuchten Daten spezifiziert.

6. Mobilknoten nach Anspruch 4 oder 5, **dadurch gekennzeichnet, dass**
- die zweite Schnittstelleneinheit angepasst ist, eine Suchanfrage von der Netzwerkschicht-Routingprotokoll-(EDSR)-Schicht zu empfangen;
wobei der Mobilknoten umfasst:
- eine Evaluationseinheit (30), die angepasst ist, die Dienstanfrage auf der Ebene der Mobil-Peer-to-Peer-Netzwerkprotokollschicht (MPP) zu evaluieren und eine Erfüllung zumindest eines Suchkriteriums zu identifizieren; und
- eine Suchantworterzeugungseinheit (34), die angepasst ist, eine Suchantwort zu erzeugen und die Suchantwort an die zweite Schnittstelleneinheit weiterzuleiten, wenn Suchkriterien erfüllt sind; und
- eine Weiterleitungseinheit (22), die angepasst sind, die Suchantwort zu einem Dienst-anfragenden Mobilknoten in dem drahtlosen Netzwerk zu senden, bei dem die Suche initiiert wurde.

7. Computer-lesbares Medium zum Speichern eines Computerprogramms mit Anweisungen, die, wenn durch einen oder mehrere Computer ausgeführt, einen oder mehrere Computer veranlassen, jeden der Verfahrensschritte der Ansprüche 1-3 durchzuführen.

## Revendications

1. Procédé de traitement de demandes de service pour l'utilisation dans un réseau point-à-point mobile comprenant un noeud mobile demandeur de service d'un réseau sans fil, le noeud mettant en oeuvre une pile de protocoles comprenant un protocole d'acheminement de couche réseau (EDSR), prévu pour l'acheminement entre des noeuds mobiles dans le réseau sans fil, et un protocole de réseau point-à-point mobile (MPP) situé sur le dessus du protocole d'acheminement de couche réseau (EDSR), ***caractérisé par*** les étapes consistant à :
- recevoir une demande de service comprenant des critères de recherche spécifiant des aspects de proximité au noeud mobile demandeur de service ou un type de ressources de service au niveau de la couche de protocole de réseau point-à-point mobile (MPP) à partir d'une application point-à-point mobile (10) s'exécutant sur le dessus de la couche de protocole de réseau point-à-point mobile ;
- faire suivre la demande de service vers la couche de protocole d'acheminement de couche réseau (EDSR) et transformer les critères de recherche en un message d'interrogation selon le protocole d'acheminement de couche réseau (EDSR) ; et
- faire suivre le message d'interrogation vers au moins un noeud mobile supplémentaire dans le réseau sans fil en utilisant le protocole d'acheminement de couche réseau ;
dans lequel le procédé comprend en outre une étape consistant à recevoir une réponse de recherche à la demande de service au niveau du noeud mobile demandeur de service, dans lequel la réponse de recherche (FREP) comprend des informations de chemin en ce qui concerne un chemin dans le réseau sans fil reliant le noeud mobile demandeur de service et le noeud mobile fournisseur de service, et
évaluer différents résultats de recherche selon au moins une fonction de coût prédéterminée quand une pluralité de réponses de recherche sont reçues, dans lequel l'au moins une fonction de coût prédéterminée évalue des caractéristiques d'au moins un noeud mobile dans un chemin du réseau sans fil reliant le noeud mobile demandeur de service et le noeud mobile fournisseur de service.

2. Procédé selon la revendication 1, ***caractérisé en ce que*** le message d'interrogation (HREQ) est lié à une recherche de données et **en ce que** le message d'interrogation (HREQ) spécifie une taille de fichier et des informations d'empreinte digitale en ce qui concerne des données recherchées.

3. Procédé selon la revendication 1 ou 2,
***caractérisé en ce qu*'**il comprend en outre les étapes consistant à :
- recevoir le message d'interrogation au niveau d'un noeud mobile fournisseur de service supplémentaire du réseau sans fil ;
- faire suivre le message d'interrogation vers la couche de protocole de réseau point-à-point mobiles (MPP) au niveau du noeud mobile fournisseur de service selon le protocole d'acheminement de couche réseau (EDSR) ;
- recevoir une évaluation en provenance d'une unité d'évaluation sur le niveau d'une couche de protocole de réseau point-à-point (MPP) que les critères de recherche soient ou non satisfaits ; et
- envoyer ladite réponse de recherche au noeud mobile demandeur de service dans le réseau sans fil où la recherche a été amorcée quand au moins un critère de recherche est satisfait.

4. Noeud mobile conçu pour être mis en oeuvre dans un réseau sans fil et exécuté sur une pile de protocoles comprenant un protocole d'acheminement de couche réseau (EDSR), prévu pour l'acheminement entre des noeud mobiles du réseau sans fil, et un protocole de réseau point-à-point mobile (MPP) situé sur le dessus du protocole d'acheminement de couche réseau (EDSR), ***caractérisé par** :*
- une première unité d'interface (18) conçue pour recevoir une demande de service comprenant des critères de recherche spécifiant des aspects de proximité au noeud mobile demandeur de service ou un type de ressources de service au niveau de la couche de protocole de réseau point-à-point mobile (MPP) à partir d'une application point-à-point mobile (10) s'exécutant sur le dessus de la couche de protocole de réseau point-à-point mobile (MPP) ;
- une seconde unité d'interface (22) conçue pour faire suivre la demande de service vers la couche de protocole d'acheminement de couche réseau (EDSR) ;
- une unité de transformation (20) conçue pour transformer les critères de recherche en un message d'interrogation selon le protocole d'acheminement de couche réseau ; et
- une unité d'expédition (22) conçue pour faire suivre le message d'interrogation vers au moins un noeud mobile supplémentaire dans le réseau sans fil en utilisant le protocole d'acheminement de couche réseau (EDSR) pour l'identification d'un noeud mobile fournisseur de service ;
dans lequel l'unité d'expédition (22) est conçue pour recevoir une réponse de recherche, dans lequel la réponse de recherche (FREP) comprend des informations de chemin en ce qui concerne un chemin dans le réseau sans fil reliant le noeud mobile et le noeud mobile fournisseur de service envoyant la réponse de recherche, lesquelles informations de chemin sont utilisées par la seconde unité d'interface (22) pendant l'échange de données suivant la recherche ;
et dans lequel le noeud mobile comprend en outre une seconde unité d'évaluation (26) conçue pour évaluer différents résultats de recherche quand une pluralité de réponses de recherche sont reçues, dans lequel la seconde unité d'évaluation (26) est conçue pour traiter au moins une fonction de coût prédéterminée qui reflète des caractéristiques d' au moins un noeud mobile dans un chemin du réseau sans fil reliant le noeud mobile et le noeud mobile fournisseur de service.

5. Noeud mobile selon la revendication 4,
***caractérisé en ce* que** l'unité de transformation (20) est conçue pour transformer les données liées à une recherche en un message d'interrogation (HREQ) lié à la recherche de données et **en ce que** le message d'interrogation (HREQ) spécifie une taille de fichier et des informations d'empreinte digitale en ce qui concerne les données recherchées.

6. Noeud mobile selon la revendication 4 ou 5,
***caractérisé en ce que***
- la seconde unité d'interface est conçue pour recevoir une demande de recherche en provenance de la couche de protocole d'acheminement de couche réseau (EDSR) ;
dans lequel le noeud mobile comprend :
- une unité d'évaluation (30) conçue pour évaluer la demande de service sur le niveau de la couche le de protocole point-à-point mobile et pour identifier la satisfaction d'au moins un des critères de recherche ; et
- une unité de production de réponse de recherche (34) conçue pour produire une réponse de recherche et pour faire suivre la réponse de recherche vers la seconde unité d'interface lorsque des critères de recherche sont satisfaits ; et
- une unité d'expédition (22) conçue pour envoyer la réponse de recherche à un noeud mobile demandeur de service dans le réseau sans fil où la recherche a été amorcée.

7. Support lisible par ordinateur pour stocker un programme informatique comprenant des instructions qui, lorsqu'elles sont exécutées par un ou plusieurs ordinateurs, amènent le ou les plusieurs ordinateurs à effectuer chacune des étapes de procédé selon les revendications 1 à 3.
